# EUROPEAN PATENT APPLICATION

(11) **EP 2 886 548 A1**
(43) Date of publication of application: **24.06.2015**
(21) Application number: 13831052.9
(22) Date of filing: 19.08.2013
(51) Int. Cl.: C07F 5/02

(54) **METHOD FOR PRODUCING BORINIC ACID DERIVATIVE, AND NOVEL BORINIC ACID DERIVATIVE**

(30) Priority: 20.08.2012 JP 2012181578
(71) Applicant: Manac Inc., Fukuyama-shi, Hiroshima 721-0956 (JP)
(72) Inventor: MURAKAMI, Satoshi, Fukuyama-shi Hiroshima 721-0956 (JP); SUZUKI, Takayuki, Fukuyama-shi Hiroshima 721-0956 (JP)
(74) Representative: Hoffmann Eitle
(86) International application number: PCT/JP2013/072062
(87) International publication number: WO 2014/030600

(57) **Abstract**

The present invention relates to a method for preparing borinic acid derivatives and novel borinic acid derivatives. The preparing method of the present invention provides borinic acid derivatives of general formula (2): 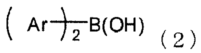 wherein
Ar is the same as defined in the description and claims, selectively and in a high yield by reacting a compound of general formula (1):

Ar-M (1)

wherein
Ar and M are the same as defined in the description and claims, with tri-t-butyl borate and then hydrolyzing the reaction product.

## Description

### TECHNICAL FIELD

The present invention relates to a method for selectively preparing borinic acid derivatives and novel borinic acid derivatives.

### BACKGROUND ART

Borinic acid is known to be able to be used in Suzuki cross-coupling reactions in a similar manner to boronic acid (see, for example, Patent Documents 1 to 3), and, in particular, is a useful intermediate for organic synthesis in the fields of electrical and electronic materials and pharmaceuticals.

Methods for preparing borinic acid comprising lithiating an aromatic compound and reacting the lithiated product with a trialkyl borate have been disclosed, and for example, there was disclosed a method of lithiating 2-(1,1-dimethylethyl)-5-phenyl-2H-tetrazole using n-butyl lithium, reacting the lithiated product with trimethyl borate and then subjecting to a hydrolysis reaction to synthesize bis[2-[2(1,1-dimethylethyl)-2H-tetrazol-5-yl]phenyl]borinic acid (see, for example, Patent Document 2).

In addition, methods of reacting an aromatic Grignard reagent with a trialkyl borate have also been disclosed, and for example, there was disclosed a method of reacting 3,4-dichlorophenyl magnesium bromide with trimethyl borate and then treating with acid to yield bis(3,4-dichlorophenyl)borinic acid (see, for example, Patent Document 3). In this method, the boronic acid is formed when 1.1 equivalents of trialkyl borate are used with respect to the aromatic Grignard reagent, and the borinic acid is obtained in a high yield when 0.7 equivalents of trialkyl borate are used.

### PRIOR ART DOCUMENTS

### Patent Documents

Patent Document 1: Japanese Laid-open Patent [Kohyo] Publication No. 2011-515335
Patent Document 2: Japanese Laid-open Patent [Kokai] Publication No. Hei 06-192240(1994)
Patent Document 3: Japanese Laid-open Patent [Kohyo] Publication No. 2009-526826

### DISCLOSURE OF THE INVENTION

### Problems to be Solved by the Invention

However, even if these preparing methods disclosed in the prior art are used, the yield of the borinic acid is low at 45% to 57%, resulting in the problem of these methods having an industrially unsatisfactory yield. An object of the present invention is to provide an industrially applicable and simple preparing method that allows to give borinic acid derivatives selectively and in a high yield.

### Means for Solving the Problems

As a result of having conducted extensive studies to solve the aforementioned problems, the present inventors have found that borinic acids can be obtained selectively and in a high yield by reacting tri-t-butyl borate with an organometallic compound, thereby leading to completion of the present invention. Namely, the present invention is as indicated below.

Namely, the present invention relates to a method for preparing borinic acid derivatives of general formula (2): 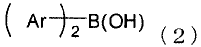 wherein
Ar represents an aromatic cyclic hydrocarbon group or aromatic heterocyclic group,
comprising reacting a compound of general formula (1):

Ar-M (1)

wherein
Ar is the same as previously defined, M represents Li or MgX, and X represents a chlorine atom, bromine atom or iodine atom, with tri-t-butyl borate, and then hydrolyzing the reaction product.

In addition, the present invention relates to novel borinic acid derivatives of general formula (3): 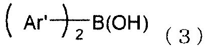 wherein
Ar' represents a group of the following formula: 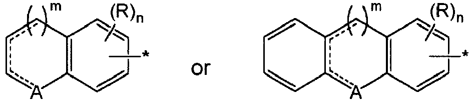 wherein
m represents 0 or 1, A represents -O-, -S- or -NR¹-, A may further represent -C(R²)₂- in the case where m is 0, R¹ represents a hydrogen atom, alkyl group having 1 to 6 carbon atoms or aromatic cyclic hydrocarbon group, and R² may be the same or different and represents a hydrogen atom or alkyl group having 1 to 6 carbon atoms;
R represents an alkyl group having 1 to 6 carbon atoms, an alkoxy group having 1 to 6 carbon atoms or a cycloalkyl group having 3 to 6 carbon atoms, and n represents 0 to 5;
a formula:
-̅-̅-̅-̅-̅-̅ represents a single bond or double bond, that is to say a ring that contains A may therefore be saturated or unsaturated; and
a symbol: * indicates the bonding site to B (boron) provided that the substitution positions of R and the symbol: * are respectively not limited to a benzene ring.

### Effects of the Invention

According to the preparing method of the present invention, borinic acid derivatives, which, in particular, are useful intermediates for organic synthesis in the fields of electrical and electronic materials and pharmaceuticals, can be easily prepared selectively and in a high yield. Thus, the preparing method of the present invention is expected to be available industrially. In addition, previously unreported and novel borinic acid derivatives can be provided by the preparing method of the present invention.

### BRIEF DESCRIPTION OF THE DRAWINGS

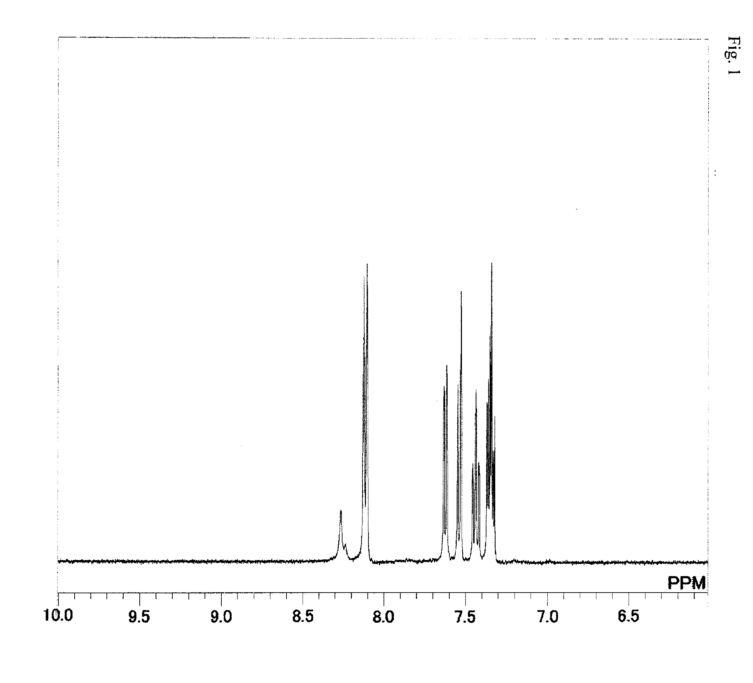

FIG. 1 shows 1H-NMR spectral data of bis(4-dibenzofuran)borinic acid obtained in Example 1.
FIG. 2 shows a molecular structural diagram (ORTEP diagram) of bis(4-dibenzofuran)borinic acid obtained in Example 1, using the crystal structure analysis by single crystal X-ray diffraction.

### BEST MODE FOR CARRYING OUT THE INVENTION

The following provides a detailed explanation of embodiments of the present invention.

### <Method for Preparing Borinic Acid Derivatives>

The present invention relates to a method for preparing borinic acid derivatives of general formula (2): 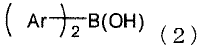 wherein
Ar represents an aromatic cyclic hydrocarbon group or aromatic heterocyclic group,
by reacting a compound of general formula (1):

Ar-M (1)

wherein
Ar is the same as previously defined, M represents Li or MgX, and X represents a chlorine atom, bromine atom or iodine atom, with tri-t-butyl borate and then by hydrolyzing the reaction product.

In the present invention, an "aromatic cyclic hydrocarbon group" refers to a monovalent monocyclic or condensed polycyclic group having 6 to 20 carbon atoms and containing at least one aromatic ring, and examples thereof include phenyl, naphthyl, tetrahydronaphthyl, anthryl, pyrenyl, indenyl, fluorenyl, acenaphthylenyl, phenanthryl and phenalenyl groups. In addition, these may be substituted with one or more arbitrary substituents that are not involved in the reaction. Examples of such substituents include alkyl groups having 1 to 6 carbon atoms, alkoxy groups having 1 to 6 carbon atoms, cycloalkyl groups having 3 to 6 carbon atoms, aryl groups having 6 to 20 carbon atoms and heteroaryl groups having 2 to 20 carbon atoms.

In the present invention, an "aromatic heterocyclic group" refers to a monovalent monocyclic or condensed polycyclic group having 2 to 20 carbon atoms and containing at least one aromatic heterocycle, and specific examples thereof include furyl, benzofuryl, dibenzofuranyl, thienyl, benzothienyl, dibenzothienyl, pyrrolyl, indolyl, carbazolyl, imidazolyl, benzoimidazolyl, pyrazolyl, oxazolyl, benzooxazolyl, thiazolyl, benzothiazolyl, furazanyl, pyridyl, pyranyl, pyrazinyl, pyrimidinyl, pyridazinyl, triazinyl, azepinyl, quinolyl, indolidinyl, cinnolinyl, purinyl, carbonylyl, phenanthrolynyl and imidazopyrimidinyl groups. In addition, these groups may be substituted with one or more arbitrary substituents that are not involved in the reaction. Examples of such substituents include alkyl groups having 1 to 6 carbon atoms, alkoxy groups having 1 to 6 carbon atoms, cycloalkyl groups having 3 to 6 carbon atoms, aryl groups having 6 to 20 carbon atoms and heteroaryl groups having 2 to 20 carbon atoms.

In the present invention, an "alkyl group having 1 to 6 carbon atoms" refers to, either alone or in combination with other terms, a monovalent, linear or branched aliphatic saturated hydrocarbon group having 1 to 6 carbon atoms, and examples thereof include methyl, ethyl, propyl, isopropyl, n-butyl, isobutyl, s-butyl, t-butyl, pentyl and hexyl groups. Thus, in the present invention, an "alkoxy group having 1 to 6 carbon atoms" refers to a group of -OR^{a}, wherein R^{a} represents an alkyl group having 1 to 6 carbon atoms as previously defined.

In the present invention, a "cycloalkyl group having 3 to 6 carbon atoms" refers to, either alone or in combination with other terms, a monovalent, cyclic saturated hydrocarbon group having 3 to 6 carbon atoms, and examples thereof include cyclopropyl, cyclobutyl, cyclopentyl and cyclohexyl groups.

In addition, in the present invention, an "aryl group having 6 to 20 carbon atoms" has the same meaning as the aforementioned "aromatic cyclic hydrocarbon group" and both can be used interchangeably. Similarly, a "heteroaryl group having 2 to 20 carbon atoms" has the same meaning as the aforementioned "aromatic heterocyclic group" and both can be used interchangeably.

The preparing method of the present invention is preferably used in the case where Ar in general formula (1) represents a group of the following formula: 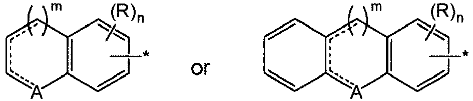 wherein
m represents 0 or 1, A represents -O-, -S- or -NR¹ -, A may further represent -C(R²)₂**-** in the case where m is 0, R¹ represents a hydrogen atom, alkyl group having 1 to 6 carbon atoms or aromatic cyclic hydrocarbon group, and R² may be the same or different and represents a hydrogen atom or alkyl group having 1 to 6 carbon atoms;
R represents an alkyl group having 1 to 6 carbon atoms, an alkoxy group having 1 to 6 carbon atoms or a cycloalkyl group having 3 to 6 carbon atoms, and n represents 0 to 5;
a formula:
-̅-̅-̅-̅-̅-̅ represents a single bond or double bond, that is to say and a ring that contains A may therefore be saturated or unsaturated; and
a symbol: * indicates a bonding site to B (boron) provided that the substitution positions of R and the symbol: * are respectively not limited to a benzene ring.

In addition, the preparing method of the present invention is more preferably used in the case where Ar in general formula (1) represents a group of the following formula: 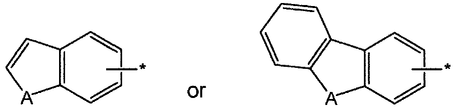 wherein
A represents -O-, -S-, -NR¹- or -C(R²)₂-, R¹ represents a hydrogen atom or methyl group, R² may be the same or different and represents a hydrogen atom or methyl group, and a symbol: * is the same as previously defined.

There are no particular limitations in the method used to prepare a compound of general formula (1) used in the preparing method of the present invention and a compound of general formula (1) can be synthesized according to any known method. A compound of general formula (1) in which M represents MgX is an organic magnesium halide typically referred to as a Grignard reagent, and can be obtained in accordance with the similar preparation methods to those used for known Grignard reagents, more specifically, by allowing magnesium to react on the corresponding halogeno-aromatic compound (Ar-X, wherein Ar and X are the same as previously defined) (see, for example, the method described in Japanese Laid-open Patent [Kokai] Publication No. 2002-047292). In addition, a compound of general formula (1) in which M represents Li can be obtained in accordance with a known lithiation reaction, more specifically, by allowing an alkyl lithium reagent such as n-butyl lithium to react on the corresponding aromatic compound (Ar-H or Ar-X, wherein Ar and X are the same as previously defined) (see, for example, Patent Document 2). Alternatively, this compound can also be obtained by allowing lithium granules to react on the corresponding chloroaromatic compound (Ar-Cl, wherein Ar is the same as previously defined) (see, for example, the method described in Japanese Laid-open Patent [Kokai] Publication No. 2002-308883). A compound of general formula (1) in which M represents Li is used more preferably.

In the case of using the resulting compound of general formula (1) in the preparing method of the present invention, it may be used after isolating or may be used directly after preparation in the form of a solution. It is preferably used directly after preparation in the form of a solution from the viewpoint of safety.

The tri-t-butyl borate used in the preparing method of the present invention is available from a supplier such as Sigma-Aldrich Japan K.K. Alternatively, tri-t-butyl borate can also be prepared in accordance with a known method (see, for example, Journal of the Chemical Society, 78, 3613, 1956).

Although there are no particular limitations in the amount of the tri-t-butyl borate used in the preparing method of the present invention, it is preferably 0.1 mole to 2.0 moles, more preferably 0.3 moles to 1.05 moles, and from the viewpoint of the reaction rate, even more preferably 0.3 moles to 0.7 moles, based on 1 mole of the compound of general formula (1).

A solvent may be used in the preparing method of the present invention. There are no particular limitations in the solvent used provided that it is a solvent that is inert in the reaction, and it is suitably selected depending on the desired reaction temperature. A solvent may be used alone, or two or more types of solvents may be used by mixing at an arbitrary ratio. Examples of solvents that can be used include aromatic hydrocarbon solvents such as toluene and xylene; ether solvents such as tetrahydrofuran (THF), diethyl ether and dioxane; aliphatic hydrocarbon solvents such as n-hexane, n-heptane and cyclohexane; and halogenated aliphatic hydrocarbon solvents such as dichloromethane, chloroform, carbon tetrachloride and 1,2-dichloroethane. In addition, a solvent in preparing the compound of general formula (1) can also be used. The amount of solvent used is 0.5 times to 20 times (based on weight), and preferably 1 time to 10 times, based on 1 g of the compound of general formula (1).

The reaction temperature to react a compound of general formula (1) with tri-t-butyl borate in the preparing method of the present invention is preferably within the range of -80°C to 80°C and more preferably within the range of-80°C to 40°C.

The reaction time to react a compound of general formula (1) with tri-t-butyl borate in the preparing method of the present invention can be suitably set according to conditions such as the amounts and kinds of starting materials used, the presence or absence and kind of solvent and the reaction temperature. Normally, the reaction time is preferably 10 minutes to 24 hours and more preferably 10 minutes to 6 hours from the viewpoint of workability.

A diaryl di(t-butoxy)borate salt of general formula (4): 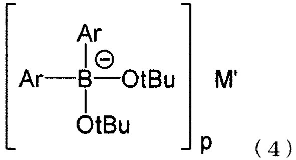 wherein
Ar is the same as previously defined, M' represents Li⁺ or Mg²⁺, p is 1 in the case where M' is Li⁺, and p is 2 in the case where M' is Mg²⁺, is formed by the aforementioned reaction. A borinic acid derivative of general formula (2): 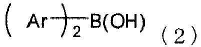 wherein
Ar is the same as previously defined,
can be easily obtained by hydrolyzing the resulting reaction product (borate salt) using an ordinary method. More specifically, after completion of the reaction for forming the borate salt, the borate salt can be hydrolyzed by a method, adding an aqueous solution of mineral acid such as hydrochloric acid, sulfuric acid or phosphoric acid (refer to the method described in Japanese Laid-open Patent [Kohyo] Publication No. 2007-297297).

The amount of acid used in the aforementioned hydrolysis is preferably 0.1 times to 100 times (based on weight), and more preferably 0.2 times to 4 times from the viewpoint of workability, based on 1 g of the compound of general formula (1).

The temperature in the aforementioned hydrolysis is preferably within the range of -80°C to 80°C and more preferably within the range of -80°C to 40°C.

The borinic acid derivative of general formula (2) obtained by the aforementioned hydrolysis may be further isolated and purified by an ordinary method such as recrystallization, distillation or column chromatography.

### <Novel Borinic Acid Derivatives>

The present invention provides novel borinic acid derivatives of general formula (3): 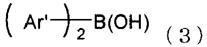 wherein
Ar' represents a group of the following formula: 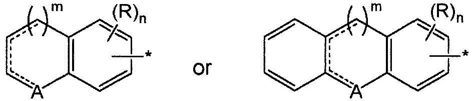 wherein
m represents 0 or 1, A represents -O-, -S- or -NR¹-, A may further represent -C(R²)₂- in the case where m is 0, R¹ represents a hydrogen atom, alkyl group having 1 to 6 carbon atoms or aromatic cyclic hydrocarbon group, and R² may be the same or different and represents a hydrogen atom or alkyl group having 1 to 6 carbon atoms;
R represents an alkyl group having 1 to 6 carbon atoms, an alkoxy group having 1 to 6 carbon atoms or a cycloalkyl group having 3 to 6 carbon atoms, and n represents 0 to 5;
a formula:
-̅-̅-̅-̅-̅-̅ represents a single bond or double bond, that is to say a ring that contains A may therefore be saturated or unsaturated; and
a symbol: * indicates the bonding site to B (boron) provided that the substitution positions of R and the symbol: * are respectively not limited to a benzene ring.

In particular, the present invention provides novel borinic acid derivatives of general formula (3) in which Ar' represents a group of the following formula: 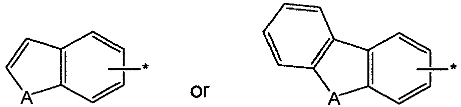 wherein
A represents -O-, -S-, -NR¹- or -C(R²)₂-, R¹ represents a hydrogen atom or methyl group, R² may be the same or different and represents a hydrogen atom or methyl group, and the symbol: * is the same as previously defined.

Although there are no particular limitations thereon, examples of compounds of general formula (3) include bicyclic compounds such as bis(benzofuran-2-yl)borinic acid, bis(benzothiophen-2-yl)borinic acid, bis(1-methylindol-2-yl)borinic acid, bis(1-methylindol-3-yl)borinic acid, bis(1-methylindol-5-yl)borinic acid, bis(quinolin-4-yl)borinic acid, bis(quinolin-5-yl)borinic acid, bis(quinolin-6-yl)borinic acid and bis(2-methylquinolin-6-yl)borinic acid, and tricylic compounds such as bis(dibenzofuran-2-yl)borinic acid, bi(dibenzofuran-4-yl)borinic acid, bis(dibenzothiophen-2-yl)borinic acid, bis(dibenzothiopheny-4-yl)borinic acid, bis(9H-carbazol-1-yl)borinic acid, bis(9H-carbazol-3-yl)borinic acid, bis(9H-fluoren-9-yl)borinic acid, bis(9,9-dimethyl-9H-fluoren-2-yl)borinic acid, bis(9,9-diethyl-9H-fluoren-2-yl)borinic acid, bis(9,9-dipropyl-9H-fluoren-2-yl)borinic acid, bis(9,9-dibutyl-9H-fluoren-2-yl)borinic acid, bis(9,9-dipentyl-9H-fluoren-2-yl)borinic acid and bis(9,9-dihexyl-9H-fluoren-2-yl)borinic acid. These compounds are previously unreported and novel compounds.

Novel borinic acid derivatives of general formula (3) are obtained by hydrolyzing a compound of general formula (4) obtained by reacting a compound of general formula (1) with tri-t-butyl borate, using an ordinary method. The reaction conditions, definitions and preferable modes thereof follow those described in the above "Method for Preparing Borinic Acid Derivatives".

### <Method for Preparing Borate Salt Derivatives>

As a result of further examining the method for preparing borinic acid derivatives of the present invention, the present inventors have found that borate salts, tetra-coordinated ate type complexes can be obtained as intermediates thereof. Tetra-coordinated ate type complexes of boron compounds have attracted attention in recent years as novel boron reagents in metal-catalyzed reactions (see, for example, Angew. Chem. Int. Ed. 2008, 47, 928-931), and novel borate salt derivatives are expected as novel boron reagents. Thus, the present invention also relates to a method for preparing a borate salt derivative of general formula (4): 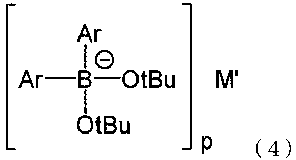 wherein
Ar represents an aromatic cyclic hydrocarbon group or aromatic heterocyclic group, M' represents Li⁺ or Mg²⁺, p is 1 in the case where M' is Li⁺, and p is 2 in the case where M' is Mg²⁺,
comprising reacting a compound of general formula (1):

Ar-M (1)

wherein
Ar is the same as previously defined, M represents Li or MgX and X represents a chlorine atom, bromine atom or iodine atom,
with tri-t-butyl borate.

The method for preparing borate salts of the present invention is to give the borate salt derivative of general formula (4) produced by reacting a compound of formula (1) with tri-t-butyl borate without subjecting to the following hydrolysis step. The reaction conditions, definitions and preferable modes thereof follow those described in the above "Method for Preparing Borinic Acid Derivatives" with the exception of the hydrolysis step.

### <Novel Borate Salt Derivatives>

In addition, the present invention provides novel borate salt derivatives of general formula (5): 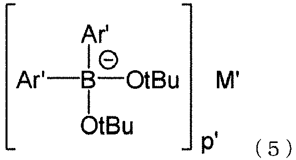 wherein
Ar' represents a group of the following formula: 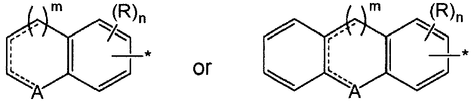 wherein
m represents 0 or 1, A represents -O-, -S- or -NR¹-, A may further represent -C(R²)₂- in the case where m is 0, R¹ represents a hydrogen atom, alkyl group having 1 to 6 carbon atoms or aromatic cyclic hydrocarbon group, and R² may be the same or different and represents a hydrogen atom or alkyl group having 1 to 6 carbon atoms;
R represents an alkyl group having 1 to 6 carbon atoms, an alkoxy group having 1 to 6 carbon atoms or a cycloalkyl group having 3 to 6 carbon atoms, and n represents 0 to 5;
a formula:
-̅-̅-̅-̅-̅-̅ represents a single bond or double bond, that is to say a ring that contains A may therefore be saturated or unsaturated; and
a symbol: * indicates the bonding site to B (boron) provided that the substitution positions of R and the symbol: * are respectively not limited to a benzene ring; and
M' represents Li⁺ or Mg²⁺, p' is 1 in the case where M' is Li⁺, and p' is 2 in the case where M' is Mg²⁺.

In particular, novel borate salt derivatives of general formula (5) are provided in which Ar' represents a group of the following formula: 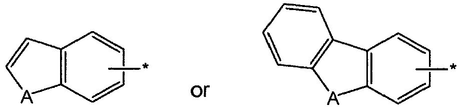 wherein
A represents -O-, -S-, -NR¹- or -C(R²)₂-, R¹ represents a hydrogen atom or methyl group, R² may be the same or different and represents a hydrogen atom or methyl group, and a symbol: * is the same as previously defined.

In addition, novel borate salt derivatives of general formula (5) in which M' represents Li⁺ are provided, in particular.

Novel borate salt derivatives of general formula (5) are obtained by a reaction of a compound of general formula (1) with tri-t-butyl borate. The reaction conditions, definitions and preferable modes thereof follow those described in the above "Method for Preparing Borinic Acid Derivatives".

### EXAMPLES

Although the following indicates examples for clarifying embodiments of the present invention, the present invention is not limited to only the contents of the examples indicated here.

The methods used to measure purity, melting point and NMR spectra of compounds obtained in the examples are as described below.

### <Purity>

Purity was measured using high-performance liquid chromatography. Measurement conditions were as indicated below.

**Sample preparation: 1.0 mg of sample was dissolved in 0.5 mL of acetonitrile.**

| | |
|---|---|
| Detector: | SPD-20A (Shimadzu Corp.) |
| Oven: | CTO-20A (Shimadzu Corp.) |
| Pump: | LC-20AD (Shimadzu Corp.) |
| Column: | ODS-80TM (Tosoh Corp.) |

**Column Temperature: 40°C**

| | |
|---|---|
| Eluent A: | Acetonitrile: phosphoric acid = 1000: 0.5 |
| Eluent B: | Water: phosphoric acid = 1000: 0.5 |
| Gradient: | A 40% (0 to 15 min) to A 80% (20 to 35 min) |
| Flow rate: | 1.0 mL/min |
| Wavelength: | 254 nm |

### <Melting Point>

Melting point was measured by raising the temperature from 50°C to 280°C at the rate of 5°C per minute using the Model B-545 Melting Point Determination Apparatus (Nihon Buchi K.K.).

### <NMR Spectra>

¹H-NMR and ¹¹B-NMR spectra were measured with by NMR (JNM-AL400, JEOL Ltd.) using prepared solutions mixing a compound and deuterated DMSO (Cambridge Isotope Laboratories, Inc., DMSO-d₆ containing 0.05% TMS). Furthermore, tetramethylsilane was used as an internal standard substance when measuring ¹H-NMR spectra, and a tetrahydrofuran complex of boron trifluoride was used as an internal standard substance when measuring ¹¹B-NMR spectra.

### <Crystal Structure Analysis by X-Ray Diffraction>

Crystal structure was analyzed using a single crystal X-ray diffraction apparatus (VeriMax Saturn CCD724 HG, Rigaku Corp.) (X-ray source: Mo).

### [Example 1]

### Synthesis of Bis(dibenzofuran-4-yl)borinic acid

THF (80 mL) and dibenzofuran (Tokyo Chemical Industry Co., Ltd.) (15 g, 0.09 mol) were added to a 300 mL glass flask equipped with a stirring device, thermometer, U-tube, reflex condenser and dropping funnel in an argon atmosphere and the dibenzofuran was dissolved while stirring at room temperature. After dissolving, the solution was cooled to an internal temperature of -10°C to 0°C, a 2.3 mol/L cyclohexane solution of n-butyl lithium (28.6 g, 0.09 mol) was added dropwise thereto and the solution was allowed to react for 1 hour at the same temperature. When the reaction solution was sampled and confirmed by ¹H-NMR, the reaction yield of 4-dibenzofuranyl lithium was 90%. Moreover, to the reaction solution was added dropwise tri-t-butyl borate (Sigma-Aldrich Japan K.K.) (10.3 g, 0.05 mol) at the same temperature and the solution was allowed to react for 1 hour. Purity after completion of the reaction is shown in Table 1.

Filtering out the precipitated crystals after completion of the reaction gave 21 g of bis(dibenzofuran-4-yl) di(t-butoxy)borate lithium salt. Appearance: white powder, ¹H-NMR (ppm): δ 1.10 (s, 18H), 7.07 (t, 2H, J = 7.2 and 7.6Hz), 7.24 (t, 2H, J = 7.6 and 7.2Hz), 7.34 - 7.38 (m, 2H), 7.56 (d, 2H, J = 8.4Hz), 7.61 (dd, 2H, J = 0.8 and 6.8Hz), 7.64 (dd, 2H, J = 1.6 and 7.6Hz), 7.95 (d, 2H, J = 7.2Hz); ¹¹B-NMR (ppm): δ 3.28 (s).

The aforementioned borate salt was dissolved in THF (80 mL) and hydrolyzed by adding 35% by weight hydrochloric acid (29.1 g, 0.28 mol) and water (36 mL). Then, the organic layer was separated by liquid-liquid separation. The resulting organic layer was washed with 10% by weight salt solution and then evaporated to distill off the solvent from the organic layer under reduced pressure. To the resulting solid residue were added isopropyl alcohol (40 mL) and water (20 mL) and the mixture was washed under heating at an internal temperature of about 60°C to 70°C for 1 hour. Then, the mixture was cooled to room temperature and filtered, and the resulting solid was dried to give 12.4 g of bis(4-dibenzofuran)borinic acid having a purity of 99% (yield from dibenzofuran: 76.8%, yield from 4-dibenzofuranyl lithium: 85.3%). Appearance: white powder, m.p.: 159°C to 160°C, ¹H-NMR (ppm): δ 7.34 (t, 2H, J = 7.6 and 7.2Hz), 7.35 (t, 2H, J = 7.6 and 7.2Hz), 7.44 (t, 2H, J = 7.6 and 7.8Hz), 7.54 (d, 2H, J = 8.0Hz), 7.63 (dd, 2H, J = 1.2 and 7.2Hz), 8.12 (d, 4H, J = 6.8Hz), 8.27 (s, 1H); ¹¹B-NMR (ppm):δ 30.43 (s).

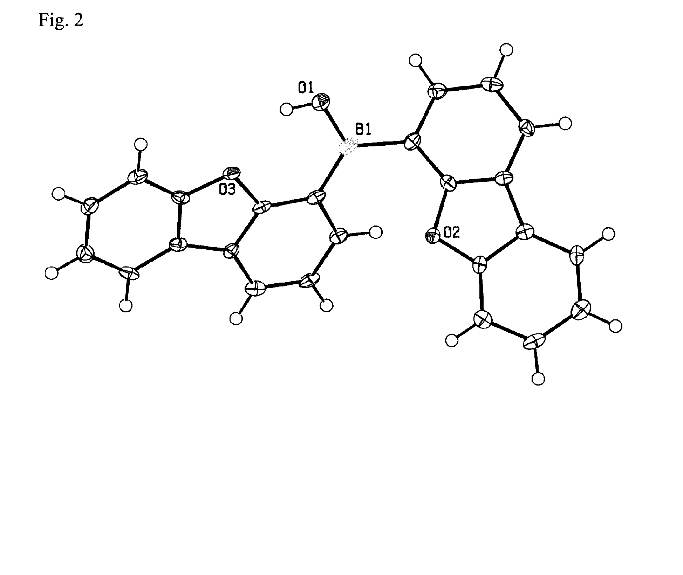

A portion of the resulting bis(4-dibenzofuran)borinic acid was recrystallized from THF/hexane to give single crystals. The single crystals were subject to crystal structure analysis using single crystal X-ray diffraction to give the crystal structure diagram (ORTEP diagram) shown in FIG. 2.

### [Comparative Examples 1-6]

A procedure was carried out in the similar manner to in Example 1 with the exception of replacing the tri-t-butyl borate with a boric acid ester shown in Table 1 to give a reaction solution. The purities after completion of the reaction are shown in Table 1. Furthermore, in Example 1 and Comparative Examples 1 to 6, since borate salts were sampled prior to hydrolysis but hydrolysis of the salts occurred during preparation of the samples for measurement by high-performance liquid chromatography, the purities after completion of the reaction shown in Table 1 refer to those of borinic acid and boronic acid after hydrolysis.

**[Table 1]**

| | Kind of Boric Acid Ester | Reaction Purity (area%) | |
|---|---|---|---|
| | | Borinic acid | Boronic acid |
| Example 1 | Tri-t-butyl borate | 89.0 | 0.3 |
| Comparative example 1 | Trimethyl borate | 10.1 | 38.5 |
| Comparative | Triisopropyl borate | 16.5 | 46.7 |
| example 2 | | | |
| Comparative example 3 | Tri-n-butyl borate | 4.5 | 54.3 |
| Comparative example 4 | Triisobutyl borate | 2.7 | 49.2 |
| Comparative example 5 | Tri-n-octyl borate | 4.9 | 58.1 |
| Comparative example 6 | Tricyclohexyl borate | 12.3 | 33.8 |

### [Example 2]

### Synthesis of Bis(dibenzothiophen-4-yl)borinic acid

THF (58 mL) and dibenzothiophene (Tokyo Chemical Industry Co., Ltd.) (10 g, 0.05 mol) were added to a 300 mL glass flask equipped with a stirring device, thermometer, U-tube, reflex condenser and dropping funnel in an argon atmosphere and the dibenzothiophene was dissolved while stirring at room temperature. After dissolving, the solution was cooled to an internal temperature of -10°C to 0°C, a 2.6 mol/L hexane solution of n-butyl lithium (21 mL, 0.05 mol) was added dropwise thereto and the solution was allowed to react for 1 hour at the same temperature. When the reaction solution was sampled and confirmed by ¹H-NMR, the reaction yield of 4-dibenzothienyl lithium was 49%. Moreover, to the reaction solution was added dropwise tri-t-butyl borate (Sigma-Aldrich Japan K.K.) (10.3 g, 0.05 mol) at the same temperature and the solution was allowed to react for 1 hour.

Filtering out the precipitated crystals after completion of the reaction gave 7.1 g of bis(dibenzothiophen-4-yl) di(t-butoxy)borate lithium salt. Appearance: while powder, ¹H-NMR (ppm): δ 1.11 (s, 18H), 7.16 (t, 2H, J = 7.6 and 7.2Hz), 7.28 - 7.31 (m, 4H), 7.80 - 7.83 (m, 6H), 8.08 - 8.10 (m, 2H).

The aforementioned borate salt was hydrolyzed and isolated using the similar method to in Example 1 to give 4.5 g of bis(4-dibenzothiophen-4-yl)borinic acid having a purity of 96% (yield from dibenzothiophene: 42.1 %, yield from 4-dibenzothienyl lithium: 86.5%). Appearance: pale yellowish-white powder, ¹H-NMR (ppm): δ 7.38 - 7.42 (m, 6H), 7.76 (d, 2H, J = 7.2Hz), 7.86 - 7.88 (m, 2H), 8.18 (d, 2H, J = 8.0Hz), 8.24 - 8.26 (m, 2H); ¹¹B-NMR (ppm): δ 20.67(s).

### [Example 3]

### Synthesis of Bis(benzofuran-2-yl)borinic acid

THF (40 mL) and benzofuran (Tokyo Chemical Industry Co., Ltd.) (4.4 g, 0.04 mol) were added to a 100 mL glass flask equipped with a stirring device, thermometer, U-tube, reflex condenser and dropping funnel in an argon atmosphere. The solution was cooled to an internal temperature of -10°C to 0°C while stirring, a 2.6 mol/L hexane solution of n-butyl lithium (14.3 mL, 0.04 mol) was added dropwise thereto and the solution was allowed to react for 1 hour at the same temperature. When the reaction solution was sampled and confirmed by ¹H-NMR, the reaction yield of 2-benzofuranyl lithium was 94%. Moreover, to the reaction solution was added dropwise tri-t-butyl borate (Sigma-Aldrich Japan K.K.) (4.3 g, 0.02 mol) at the same temperature and the solution was allowed to react for 1 hour.

Filtering out the precipitated crystals after completion of the reaction gave 6.9 g of bis(benzofuran-2-yl) di(t-butoxy)borate lithium salt. Appearance: pale yellowish-white powder, ¹H-NMR (ppm): δ 1.10 (s, 18H), 6.42 (s, 2H), 6.95 - 7.00 (m, 4H), 7.29 - 7.31 (m, 2H), 7.34 - 7.36 (m, 2H).

The aforementioned borate salt was hydrolyzed and isolated using the similar method to in Example 1 to give 4.2 g of bis(benzofuran-2-yl)borinic acid having a purity of 99% (yield from benzofuran: 86.2%, yield from 2-benzofuranyl lithium: 91.9%). Appearance: pale yellowish-white powder, ¹H-NMR (ppm): δ 6.97 (s, 2H), 7.12 - 7.21 (m, 4H), 7.5 (d, 2H, J = 7.2Hz), 7.56 (d, 2H, J = 7.2Hz); ¹¹B-NMR (ppm): δ 10.89(s).

### [Example 4]

### Synthesis of Bis(benzothiophen-2-yl)borinic acid

THF (40 mL) and benzothiophene (Tokyo Chemical Industry Co., Ltd.) (5.0 g, 0.04 mol) were added to a 100 mL glass flask equipped with a stirring device, thermometer, U-tube, reflex condenser and dropping funnel in an argon atmosphere. The solution was cooled to an internal temperature of -10°C to 0°C while stirring, a 2.6 mol/L hexane solution of n-butyl lithium (14.3 mL, 0.04 mol) was added dropwise thereto and the solution was allowed to react for 1 hour at the same temperature. When the reaction solution was sampled and confirmed by ¹H-NMR, the reaction yield of 2-benzothienyl lithium was 98%. Moreover, to the reaction solution was added dropwise tri-t-butyl borate (Sigma-Aldrich Japan K.K.) (4.3 g, 0.02 mol) at the same temperature and the solution was allowed to react for 1 hour.

Filtering out the precipitated crystals after completion of the reaction gave 8.0 g of bis(benzothiophen-2-yl) di(t-butoxy)borate lithium salt. Appearance: white powder, ¹H-NMR (ppm): δ 1.10 (s, 18H), 6.99 - 7.03 (m, 4H), 7.08 - 7.12 (m, 2H), 7.52 (d, 2H, J = 8.4Hz), 7.68 (d, 2H, J = 8.0Hz).

The aforementioned borate salt was hydrolyzed and isolated using the similar method to in Example 1 to give 4.5 g of bis(benzothiophen-2-yl)borinic acid having a purity of 99% (yield from benzothiophene: 82.7%, yield from 2-benzothienyl lithium: 83.3%). Appearance: yellowish-white powder, ¹H-NMR (ppm): δ 7.22- 7.29 (m, 4H), 7.50 (s, 2H), 7.78 (d, 2H, J = 8.0Hz), 7.87 (d, 2H, J = 7.6Hz); ¹¹B-NMR (ppm): δ 14.41(s).

### [Example 5]

### Synthesis of Bis(1-methylindol-2-yl) di(t-butoxy)borate lithium salt

THF (40 mL) and 1-methylindole (Tokyo Chemical Industry Co., Ltd.) (4.9 g, 0.04 mol) were added to a 100 mL glass flask equipped with a stirring device, thermometer, U-tube, reflex condenser and dropping funnel in an argon atmosphere. The solution was cooled to an internal temperature of -10°C to 0°C while stirring, a 2.6 mol/L hexane solution of n-butyl lithium (14.3 mL, 0.04 mol) was added dropwise thereto and the solution was allowed to react for 1 hour at the same temperature.

When the reaction solution was sampled and confirmed by ¹H-NMR, the reaction yield of 1-methyl-2-indolyl lithium was 76%. Moreover, to the reaction solution was added dropwise tri-t-butyl borate (Sigma-Aldrich Japan K.K.) (4.3 g, 0.02 mol) at the same temperature and the solution was allowed to react for 1 hour.

Filtering out the precipitated crystals after completion of the reaction gave 2.4 g of bis(1-methylindol-2-yl) di(t-butoxy)borate lithium salt (yield from 1-methylindole: 29.6%, yield from 1-methyl-2-indolyl lithium: 38.9%). Appearance: yellowish-white powder, ¹H-NMR (ppm): δ 1.09 (s, 18H), 3.76 (s, 6H), 6.19 (s, 2H), 6.75 - 6.83 (m, 4H), 7.09 (d, 2H, J = 8.0Hz), 7.27 (d, 2H, J = 6.8Hz); ¹¹B-NMR (ppm): δ 0.2(s).

### [Example 6]

### Synthesis of Bis(1-naphthyl)borinic acid

THF (30 mL) and 1-bromonaphthalene (Manac Inc.) (5.0 g, 0.02 mol) were added to a 100 mL glass flask equipped with a stirring device, thermometer, U-tube, reflex condenser and dropping funnel in an argon atmosphere. The solution was cooled to an internal temperature of -10°C to 0°C while stirring, a 2.6 mol/L hexane solution of n-butyl lithium (9.3 mL, 0.02 mol) was added dropwise thereto and the solution was allowed to react for 1 hour at the same temperature. Moreover, to the reaction solution was added dropwise tri-t-butyl borate (Sigma-Aldrich Japan K.K.) (2.7 g, 0.01 mol) at the same temperature and the solution was allowed to react for 1 hour.

After the resulting reaction solution was hydrolyzed using the similar method to in Example 1, an organic layer was obtained by liquid-liquid separation. The resulting organic layer was purified by silica gel column chromatography (ethyl acetate/n-heptane: 1/16) to give 2.7 g of bis(1-napthyl)borinic acid having a purity of 99% (yield from 1-bromonaphthalene: 81%). Appearance: white powder, ¹H-NMR (ppm): δ 7.42- 7.51(m, 6H), 7.56 (dd, 2H, J = 1.2Hz, 6.8Hz), 7.94 - 7.99 (m, 4H), 8.29 (d, 2H, J = 8.4Hz), 10.9 (s, 1H); ¹¹B-NMR (ppm): δ 47.0(s).

### [Example 7]

### Synthesis of Diphenylborinic acid

THF (10 mL) was added to a 100 mL glass flask equipped with a stirring device, thermometer, U-tube, reflex condenser and dropping funnel in an argon atmosphere. After cooling to an internal temperature of -10°C to 0°C while stirring, a 1.08 mol/L diethyl ether/cyclohexane solution of phenyl lithium (5 mL, 5.4 mol) was added. Moreover, tri-t-butyl borate (Sigma-Aldrich Japan K.K.) (0.6 g, 2.7 mol) was added dropwise at the same temperature and the solution was allowed to react for 1 hour.

After the resulting reaction solution was hydrolyzed using the similar method to in Example 1, an organic layer was obtained by liquid-liquid separation. The resulting organic layer was purified by silica gel column chromatography (ethyl acetate/n-heptane: 1/10) to give 0.46 g of diphenylborinic acid having a purity of 98% (yield from phenyl lithium: 93%). Appearance: white powder, ¹H-NMR (ppm): δ 7.40 (t, 4H, J = 7.2 and 8.0Hz), 7.45 - 7.48 (m, 2H), 7.68 (d, 4H, J = 8.0Hz), 9.95 (s, 1H; ¹¹B-NMR (ppm): δ 20.28(s).

### [Example 8]

### Synthesis of Bis(2-thienyl)borinic acid

THF (40 mL) and thiophene (Wako Pure Chemical Industries Co., Ltd.) (3.1 g, 0.04 mol) were added to a 100 mL glass flask equipped with a stirring device, thermometer, U-tube, reflex condenser and dropping funnel in an argon atmosphere. The solution was cooled to an internal temperature of -10°C to 0°C while stirring, a 2.6 mol/L hexane solution of n-butyl lithium (14.3 mL, 0.04 mol) was added dropwise thereto and the solution was allowed to react for 1 hour at the same temperature. When the reaction solution was sampled and confirmed by ¹H-NMR, the reaction yield of 2-thienyl lithium was 99%. Moreover, to the reaction solution was added dropwise of tri-t-butyl borate (Sigma-Aldrich Japan K.K.) (4.3 g, 0.02 mol) at the same temperature and the solution was allowed to react for 1 hour.

Filtering out the precipitated crystals after completion of the reaction gave 5.6 g of bis(2-thiophene) di(t-butoxy)borate lithium salt. Appearance: white powder, ¹H-NMR (ppm): δ 1.10 (s, 18H), 6.75 (d, 2H, J = 2.8Hz), 6.79 - 6.81 (m, 2H), 7.05 (d, 2H, J = 4.8Hz).

The aforementioned borate salt was hydrolyzed and isolated using the similar method as Example 1 to give 2.5 g of bis(2-thiophene)borinic acid having a purity of 99% (yield from thiophene: 70.5%, yield from 2-thienyl lithium: 71.2%). Appearance: white powder, ¹H-NMR (ppm): δ 7.30 - 7.32 (m, 2H), 7.87 (dd, 2H, J = 0.8 and 3.6Hz), 7.96 (dd, 2H, J = 0.8 and 4.8Hz), 9.90 (s, 1H); ¹¹B-NMR (ppm): δ 35.90(s).

### [Example 9]

### Synthesis of Bis(4-methoxyphenyl)borinic acid

THF (20 mL) and magnesium (0.56 g, 0.02 mol) were added to a 100 mL glass flask equipped with a stirring device, thermometer, U-tube, reflex condenser and dropping funnel in an argon atmosphere and the internal temperature was heated to 50°C to 60°C. After heating, a solution of 4-bromoanisole (4.2 g, 0.02 mol) diluted with THF (3 mL) was slowly added dropwise and the solution was allowed to react for 1 hour at the same temperature. After reacting, the solution was cooled to room temperature, and tri-t-butyl borate (Sigma-Aldrich Japan K.K.) (0.5 g, 0.002 mol) was added dropwise thereto and the solution was allowed to react for 24 hours at the same temperature. After the reaction, 35% by weight aqueous hydrochloric acid solution (4.5 g) and water (10 mL) were added and the organic layer was separated. The aqueous layer was extracted with methylene chloride (20 mL) and combined with the previously separated organic layer.

The resulting solution was concentrated and purified by silica gel column chromatography (ethyl acetate/n-heptane: 1/10) to give 0.26 g of bis(4-methoxyphenyl)borinic acid having a purity of 99% (yield from tri-t-butyl borate: 50%). Appearance: white powder, ¹H-NMR (ppm): δ 3.80 (s, 6H), 6.84 (d, 4H, J = 8.4Hz), 7.66 (d, 4H, J = 8.8Hz), 9.57 (s, 1H); ¹¹B-NMR (ppm): δ 43.27(s).

### INDUSTRIAL APPLICABILITY

As is clear from the results described in the examples, the selectivity of borinic acid with respect to boronic acid and the yield of borinic acid were improved remarkably as a result of using tri-t-butyl borate as trialkyl borate. The finding that selectivity and yield are improved by a difference in the alkyl chain of the trialkyl borate has heretofore not been known. In this manner, the preparing method of the present invention makes it possible to easily prepare borinic acid derivatives selectively and in a high yield. Thus, the preparing method of the present invention is expected to be available industrially. In addition, the preparing method of the present invention makes it possible to provide novel borinic acid derivatives that can be used in Suzuki cross-coupling reactions, and are useful intermediates for organic synthesis in the fields of electrical and electronic materials and pharmaceuticals. Moreover, the preparing method of the present invention makes it possible to prepare diaryl di(t-butoxy)borate salts. Tetra-coordinated ate type complexes of boron compounds have attracted attention in recent years as novel boron reagents in metal-catalyzed reactions including Suzuki cross-coupling reactions, and the preparing method of the present invention is therefore expected to make it possible to provide a simple method for preparing borate salt derivatives and novel borate salt derivatives.

## Claims

1. A method for preparing borinic acid derivatives of general formula (2): 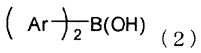 wherein
Ar represents an aromatic cyclic hydrocarbon group or aromatic heterocyclic group,
comprising reacting a compound of general formula (1):
Ar-M (1)
wherein
Ar is the same as previously defined, M represents Li or MgX, and X represents a chlorine atom, bromine atom or iodine atom,
with tri-t-butyl borate, and then hydrolyzing the reaction product.

2. The production method according to claim 1, wherein M in general formula (1) represents Li.

3. The production method according to claim 1 or claim 2, wherein the tri-t-butyl borate is used within a range of 0.1 mole to 2.0 moles based on 1 mole of the compound of general formula (1).

4. The production method according to any of claims 1 to 3, wherein the reaction with tri-t-butyl borate is carried out at a temperature within the range of -80°C to 80°C.

5. A borinic acid derivative of general formula (2'): 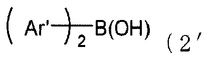 wherein
Ar' represents a group of the following formula: 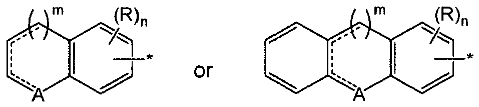 wherein
m represents 0 or 1, A represents -O-, -S- or -NR¹-, A may further represent -C(R²)₂- in the case where m is 0, R¹ represents a hydrogen atom, alkyl group having 1 to 6 carbon atoms or aromatic cyclic hydrocarbon group, and R² may be the same or different and represents a hydrogen atom or alkyl group having 1 to 6 carbon atoms;
R represents an alkyl group having 1 to 6 carbon atoms, an alkoxy group having 1 to 6 carbon atoms or a cycloalkyl group having 3 to 6 carbon atoms, and n represents 0 to 5;
a formula:
-̅-̅-̅-̅-̅-̅ represents a single bond or double bond, that is to say a ring that contains A may therefore be saturated or unsaturated; and
a symbol: * indicates the bonding site to B (boron) provided that the substitution positions of R and the symbol: * are respectively not limited to a benzene ring.

6. A method for preparing a borate salt of general formula (4): 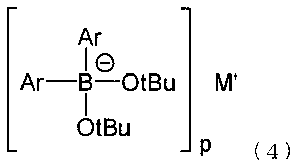 wherein
Ar represents an aromatic cyclic hydrocarbon group or aromatic heterocyclic group, M' represents Li⁺ or Mg²⁺, p is 1 in the case where M' is Li⁺, and p is 2 in the case M' is Mg²⁺,
comprising reacting a compound of general formula (1):
Ar-M (1)
wherein
Ar is the same as previously defined, M represents Li or MgX, and X represents a chlorine atom, bromine atom or iodine atom,
with tri-t-butyl borate.

7. A borate salt of general formula (5): 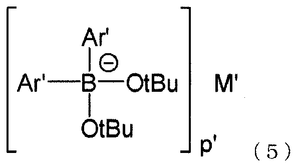 wherein
Ar' represents a group of the following formula: 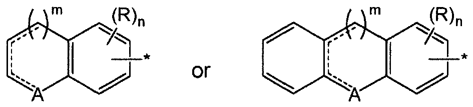 wherein
m represents 0 or 1, A represents -O-, -S- or -NR¹-, A may further represent -C(R²)₂- in the case where m is 0, R¹ represents a hydrogen atom, alkyl group having 1 to 6 carbon atoms or aromatic cyclic hydrocarbon group, and R² may be the same or different and represents a hydrogen atom or alkyl group having 1 to 6 carbon atoms;
R represents an alkyl group having 1 to 6 carbon atoms, an alkoxy group having 1 to 6 carbon atoms or a cycloalkyl group having 3 to 6 carbon atoms, and n represents 0 to 5;
a formula:
represents a single bond or double bond, that is to say a ring that contains A may therefore be saturated or unsaturated; and
a symbol: * indicates the bonding site to B (boron) provided that the substitution positions of R and the symbol: * are respectively not limited to a benzene ring; and
M' represents Li⁺ or Mg²⁺, p' is 1 in the case where M' is Li⁺, and p' is 2 in the case where M' is Mg²⁺.
